# EUROPEAN PATENT SPECIFICATION

(11) **EP 3 512 231 B1**
(45) Date of publication and mention of the grant of the patent: **16.03.2022**
(21) Application number: 18151456.3
(22) Date of filing: 12.01.2018
(51) Int. Cl.: G06F 8/61, H04W 12/06, H04L 29/06, H04L 29/08, G06F 21/51

(54) **METHOD FOR PROVIDING AN ENHANCED LEVEL OF AUTHENTICATION RELATED TO DISTRIBUTION OF A SECURE SOFTWARE CLIENT APPLICATION; AS WELL AS CORRESPONDING SYSTEM AND COMPUTER PROGRAM PRODUCT.**
VERFAHREN ZUR VERBESSERUNG DES AUTORISIERUNGSVERHÄLTNISSES BEI VERTEILUNG EINER SICHEREN SOFTWARE-CLIENT-ANWENDUNG; SOWIE KORRESPONDIERENDES SYSTEM UND COMPUTERPROGRAMM-PRODUKT.
PROCÉDÉ POUR FOURNIR UN NIVEAU D'AUTHENTIFICATION AMÉLIORÉ LIÉ À LA DISTRIBUTION D'UNE APPLICATION DE CLIENT LOGICIEL SÉCURISÉ; AINSI QUE SYSTEME CORRESPONDANT ET PRODUIT DE PROGRAMME INFORMATIQUE.

(43) Date of publication of application: 17.07.2019
(73) Proprietor: Deutsche Telekom AG, 53113 Bonn (DE)
(72) Inventor: FRIELINGSDORF, Matthias, 53227 Bonn (DE); SCHENK, Volker, 53881 Euskirchen (DE); TIETJEN, Jan, 53229 Bonn (DE)
(74) Representative: Schwöbel, Thilo K.

(56) References cited:
- EP-A1- 3 104 635
- WO-A2-01/33867
- US-A1- 2002 150 243

## Description

### BACKGROUND

The present invention relates to a method for providing an enhanced level of authentication related to a secure software client application that is provided, by an application distribution entity, in order to be transmitted, using a telecommunications network, to a client computing device in view of software code of the software client application being executed by the client computing device.

The present invention further relates to a system for providing an enhanced level of authentication related to a secure software client application that is provided, by an application distribution entity, in order to be transmitted, using a telecommunications network, to a client computing device in view of software code of the software client application being executed by the client computing device, the system comprising the client computing device, the application distribution entity, and a third party server entity.

Furthermore, the invention relates to a program comprising a computer readable program code and to a storage medium storing a computer program for providing an enhanced level of authentication related to a secure software client application provided by an application distribution entity.

WO 0133867 A2 relates to a method for validating an application for use in a mobile communication device.

Today, software - or applications or apps - to be used by client devices (such as desktop computers, or mobile computers such as tablets, mobile phones or the like) is often distributed using download stores or application stores. It is known to provide application stores such that the downloaded software is at least adapted to the client device class, i.e. a different version of the software could be downloaded dependent on whether the requesting client device is, e.g., a phone device or a tablet device.

However, it becomes more and more important - especially with respect to the development of the internet of things or mobile devices handling sensitive data - that data provided by client devices can be trusted. Since such data are typically provided by software client applications, the software client applications need to be trusted, hence the software client application need to be authenticated.

### SUMMARY

An object of the present invention is to provide a cost effective and comparatively fast solution, especially an automated solution, for providing an enhanced level of authentication related to a secure software client application that is provided by an application distribution entity and transmitted to a client computing device, and/or for providing an enhanced level of authentication related to data generated or provided by such a secure software client application.

The object of the present invention is achieved by a method according to claim 1.

According to the present invention, it is thereby advantageously possible that a software client application can be authenticated - i.e. provided with an enhanced level of authentication related to the software client application - (and thereby rendered more secure compared to a non-authenticated software client application) in an automated manner by means of the client computing device comprising an instance of an authentication provider functionality. The authentication provider functionality is configured such that it relates and/or corresponds - and is connected by means of a second secure communication channel - to an authentication provider server entity that is accessible using a telecommunications network. By means of the authentication provider functionality (and the corresponding authentication provider server entity), it is advantageously possible according to the present invention that a software client application instance on the client computing device can be authenticated independenty of the specific application distribution entity used to download the software client application instance to the client computing device. According to the present invention, the authentication provider functionality eventually provides the authentication elements or the pieces of authentication information to the software client application instance. The authentication provider functionality is located directly on the client computing device and cooperates with other applications (or apps) installed (or otherwise present or located) on the client computing device. These apps (i.e. especially the authentication provider functionality and the software client application instance considered) typically and especially exchange information using inter-process communication within the client computing device, using an internal secure communication channel (within the client computing device, i.e. internal to the client computing device). Thereby, it is advantageously possible that the software client application instance receives the authentication elements or the pieces of authentication information from the authentication provider functionality in a secure and/or protected manner. According to the present invention, it is advantageously possible that the pieces of authentication information (or the protected information; typically (part of) an asymmetric pair of cryptographic keys and/or (part of) a security token information) is not (or does not necessarily be) disclosed or known to the application distribution entity.

According to the present invention, it is thereby advantageously possible to provide a cryptographically strong authentication of the software client application instance: For each software client application instance that is executed on the client computing device and for which the method according to the present invention is used, a client certificate or client secret is present, on the client computing device and/or within the software client application instance, by means of which a mutual authentication of the communication channel between the software client application instance (and/or the respective client computing device), on the one hand, and the third party server entity (especially my means of conventionally used server certificates), on the other hand, is possible. Thereby, it is advantageously possible according to the present invention to provide an enhanced level of authentication concerning the communication (i.e. the data exchanged or transmitted) between the software client application instances of the client computing device and the third party server entity, especially relating to data generated or provided by such a secure software client application, such as, e.g., medical data, bank relating data or the like, and this with the possibility of excluding the application distribution entity from having access to (the content of) such data.

According to the present invention, it is advantageously possible to provide secure software client applications, i.e. software client applications that can be trusted, by means of requiring an authentication step to be performed. Furthermore, data exchanged between especially the software client application instance and the third party server entity should preferably be transmitted in a protected manner, especially regarding confidentiality and/or integrity and/or originality and/or non-repudiation - and especially in a manner such that the application distribution entity is denied having access to (the content of) such data, or that the application distribution entity is at least does not have access to all such data (or the content thereof).

According to the present invention, the third party server entity corresponds, e.g., to an application server, i.e. providing the server component of the software client application (instance) on the client computing device.

In conventionally known systems, different methods exist in order to improve the security of the communication between software client applications on client computing devices on the one hand, and server entities (or third party server entities) on the other hand (or between different software client applications, especially on different client computing devices): The most common approach consists in using TLS (Transport Layer Security) by means of using server certificates, i.e. the servers are authenticated towards the software client applications. However, typically the software client applications do not have a certificate typically used with a version of the TLS protocol family and, thus, the respective servers are typically not able to authenticate the software client applications in an easy and intuitive (for a user of the software client application) manner, in a comparatively cheap and/or comparatively fast manner, without requiring user interaction (or, at least, without requiring extensive user interaction) and especially automatically. An alternative consists in transmitting a secret as part of the software client application. However, conventionally such secrets are typically not individual to each software client application instance; this means that two client computing devices, having the same software client application (while, of course, having different instances of the (same) software client application), would have the same secret - hence, an attacker able to retrieve that secret (common to all such instances of the software client application) would be able to eavesdrop on the communication between the software client application instances and the respective server, and could also make the respective server believe being a software client application instance of that kind (impersonation).

According to the present invention, typically, the communication (especially inter-process communication) between different applications (or apps) within the client computing device (i.e. especially the authentication provider functionality and the software client application instance considered) is standardized, the communication or the standardization thereof especially being determined by the authentication provider functionality, and the other applications (or apps) (i.e. especially the software client application instance considered) are required to comply (or to accept) such standardization or such guideline. According to the present invention, the operating system of the client computing device is not necessarily required to support such a standardized communication between the authentication provider functionality, and the other applications (or apps) (i.e. especially the software client application instance considered); if need be, a protocol handler is used such as, e.g., "ampa://", and the transmitted data are encrypted and/or encoded, such as base64 or the like - however, at least according to a variant of the present invention, the operating system does support such a standardized communication between the authentication provider functionality, and the other applications (or apps) (i.e. especially the software client application instance considered), either using a protcol handler or not.

According to the present invention, a third secure communication channel is addditionally established between the authentication provider server entity and a third party server entity, providing the possibility that the third party server entity - that might, typically, be a developer of the software client application - initiates the distribution or the transmission of the authentication elements or the pieces of authentication information to the software client application instance in a manner independent of the specific application distribution entity used to download the software client application instance to the client computing device.

In a first step according to the present invention, the authentication provider functionality is initialized or installed within the client computing device and the second secure communication channel as well as the third secure communication channel is initialized or established. This is done in view of subsequently allowing for an authenticated transmission of data - provided by the software client application instance upon it being executed by the client computing device - to the third party server entity.

In a second step, prior to, during or subsequent to the first step, the software client application instance is transmitted, using the first secure communication channel, to the client computing device. This means that the software client application instance might be downloaded and installed (and also operatively used) prior to the authentication provider functionality being loaded and/or installed and/or activated or initialized on or within the client computing device. However, an authentication of the software client application instance (especially with respect to the third party server entity) and any communication or data transmitted or exchange especially with the third party server entity requires the authentication provider functionality to be initialized or installed within the client computing device (and the second secure communication channel as well as the third secure communication channel being initialized or established). Hence, typically the software client application instance is likely to be downloaded and/or installed during to or after the authentication provider functionality being loaded and/or installed and/or activated or initialized on or within the client computing device.

In a third step, subsequent to the second step, a fourth secure communication channel is established, between the software client application instance and the third party server entity, by means of exchanging at least parts of cryptographic key information and/or security token information using - besides the second secure communication channel and the third secure communication channel - the internal secure communication channel, the internal secure communication channel being internal to the client computing device, between the software client application instance and the authentication provider functionality.

The first secure communication channel (between the application distribution entity and the software client application instance, i.e. the client computing device) used in the second step, is a secure communication channel typically provided by the application distribution entity, i.e. typically by the application store or app store, in order to transmit (or download) the software client application instance.

According to the present invention, the authentication provider functionality is initialized or installed within the client computing device and the second secure communication channel as well as the third secure communication channel is initialized or established, thereby providing the possibility to securely transmit (and in a protected manner) any pieces of information (i.e. at least parts of cryptographic key information and/or of security token information) enabling the authentication of the authentication provider functionality and/or of the software client application instance. This provides the possibility to at least implicitly bind the at least parts of cryptographic key information and/or of security token information to the software client application instance. This binding of the at least parts of cryptographic key information and/or of security token information to the software client application instance also ensures that multiple requests to provide or to issue the at least parts of cryptographic key information and/or of security token information do not result in providing a plurality of such at least parts of cryptographic key information and/or of security token information. Typically, the application distribution entity ensures that each client computing device is able to download each software client application only once (of course, the download of updates is normally allowed).

As a consequence, the client, i.e. the software client application instance within the client computing device, is equipped with the protected information providing the possibility of a cryptographically strong authentication of the client with regard to the third party server entity (and vice versa using the server certificate), e.g. by means of using TLS with mutual authentication. However, the method according to the present invention is independent from which specific protocol is used and which secure communication channel is used; other protocols than TLS, and also the use of a VPN (Virtual Private Network) channel is possible. According to the present invention, besides the authentication of the third party server (by means of server certificates), also the cryptographically strong authentication of the client (i.e. the software client application instance and/or the client computing device) is possible. Thereby, it is possible that a request (or transmitted data) received at the third party server entity is able to be unequivocally assigned to a specific software client application instance (and hence typically a person), or - especially in case of anonymous usage - that at least no fabricated data are received. An example of the latter situation might refer to a software client application that anonymously collects medical data, e.g. for a medical survey: Without an authentication of the data provided by the different software client application instances (of the different client computing devices of the participants of the survey), the reception of fabricated or manipulated data at the third party server entity (potentially leading to false results) cannot be excluded.

Additionally, the use of a protected information that is individual to the software client application instance limits the motivation of an attacker and also the potential damage: In case that an attacker is able to successfully retrieve the protected information, the use, according to the present invention, of an instance-specific protected information (i.e. specific to each software client application instance) also means that the attacker is only able use this specific protected information, i.e. with respect to this specific software client application instance; in order to use another software client application instance, the corresponding other proctected information would need to be retrieved.

According to the present invention, the authentication provider functionality is initialized or installed within the client computing device and the second secure communication channel as well as the third secure communication channel is initialized or established, thereby providing the possibility to securely transmit (and in a protected manner) any pieces of information (i.e. at least parts of cryptographic key information and/or of security token information) enabling the authentication of the authentication provider functionality and/or of the software client application instance. The establishment of the fourth secure communication channel, between the software client application instane and the third party server entity is based on exchanging at least parts of cryptographic key information and/or security token information, i.e. it is based on exchangeing protected information. However, this does not necessarily assume that the at least parts of cryptographic key information and/or of security token information is generated - either by the authentication provider functionality and/or by the software client application instance - on the client computing device; the at least parts of cryptographic key information and/or security token information, i.e. the protected information, might be generated at the third party server entity and/or at the authentication provider server entity. If this is the case (i.e. in case that the at least parts of cryptographic key information and/or security token information, i.e. the protected information, is generated on a backend side), it is advantageously possible according to the present invention, that the developer of the software client application is able to use a comparatively high cryptographic quality of the generated protected information (i.e. the at least parts of cryptographic key information and/or security token information); typically, at a backend side, more resources, especially concerning processing power, high-quality random number generators, etc., are available. Nevertheless, it is possible and preferred according to the present invention that the protected information, i.e. the at least parts of cryptographic key information and/or security token information, is generated - either by the authentication provider functionality and/or by the software client application instance - on the client computing device.

Furthermore according to the present invention, it is possible to newly transmit a (different) protected information, i.e. the at least parts of cryptographic key information and/or security token information, with each update of the software client application instance; especially in case of any doubts that any (previously transmitted protected information, i.e. the at least parts of cryptographic key information and/or security token information, and/or - as a consequence - previously used) client certificate might be compromised.

According to an embodiment of the present invention, the internal secure communication channel corresponds to an inter process communication channel within the client computing device, especially using a protocol handler, and especially as part of the operating system of the client computing device.

Thereby, it is advantageously possible to securely transmit information between the authentication provider functionality and the software client application instance.

According to an embodiment of the present invention, the authentication provider functionality is initialized (or at least partly initialized or downloaded in a first step) by installing the authentication provider functionality - especially from the application distribution entity - as an application on the client computing device and thereby initializing and/or establishing the second secure communication channel with the authentication provider server entity,
the third secure communication channel between the authentication provider server entity and the third party server entity especially being initialized or established prior to, during or subsequent to the installation of the authentication provider functionality.

By means of initializing (or partly initializing or downloading) the authentication provider functionality from the application distribution entity, it is advantageously possible according to the present invention that the authentication provider functionality is able to be a "normal" application (or app) installable on the client computing device; in this case requiring to have the second secure communication channel (towards the authentication provider server entity) established. Alternatively to the authentication provider functionality corresponding to a "normal" application (or app), the authentication provider functionality might be a special application or part of the operating system of the client computing device (either being initially installed on the client computing device or downloaded or otherwise installed or initialized later on).

According to an embodiment of the present invention, - in order to provide for an authenticated transmission of data between the software client application instance and the third party server entity - an asymmetric pair of cryptographic keys is used, comprising a specific private cryptographic key and a specific public cryptographic key,
-- wherein the asymmetric pair of cryptographic keys is generated by the authentication provider functionality or by the software client application instance and at least a further protected information is transmitted using at least the second secure communication channel, or
-- wherein the asymmetric pair of cryptographic keys is generated by the authentication provider server entity or by the third party server entity and at least the specific private cryptographic key is transmitted using at least the second secure communication channel.

According to a first alternative of this embodiment of the present invention, the asymmetric pair of cryptographic keys is generated by the authentication provider functionality or by the software client application instance, and in order to the authentication provider functionality or the software client application instance being authenticated, a further protected information (such as a (further) cryptographic key information and/or a (further) security token information) needs to be transmitted using at least the second secure communication channel. This exchange of authenication information (or further protected information) towards the client computing device might be performed independently from the generation of the asymmetric pair of cryptographic keys by the authentication provider functionality or by the software client application instance.

According to a second alternative of this embodiment of the present invention, the asymmetric pair of cryptographic keys is generated by the authentication provider server entity or by the third party server entity, and is transmitted to the client computing device (i.e. to the authentication provider functionality and/or the software client application instance) using the second secure communication channel.

According to an embodiment of the present invention, - in order to provide for an authenticated transmission of data between the software client application instance and the third party server entity - security token information is used,
-- wherein the security token information is generated by the authentication provider functionality or by the software client application instance and a further protected information is transmitted using at least the second secure communication channel, or
-- wherein the security token information is generated by the authentication provider server entity or by the third party server entity and transmitted using at least the second secure communication channel.

According to a first alternative of this embodiment of the present invention, security token information is generated by the authentication provider functionality or by the software client application instance, and in order to the authentication provider functionality or the software client application instance being authenticated, a further protected information (such as a (further) cryptographic key information and/or a (further) security token information) needs to be transmitted using at least the second secure communication channel. This exchange of authenication information (or further protected information) towards the client computing device might be performed independently from the generation of security token information by the authentication provider functionality or by the software client application instance.

According to a second alternative of this embodiment of the present invention, security token information is generated by the authentication provider server entity or by the third party server entity, and is transmitted to the client computing device (i.e. to the authentication provider functionality and/or the software client application instance) using the second secure communication channel.

According to an embodiment of the present invention, a fifth secure communication channel, directly between the authentication provider functionality and the third party server, is established,
wherein the fifth secure communication channel is established prior to the fourth secure communication channel being established, between the software client application instance and the third party server entity, or
wherein the fifth secure communication channel is established once the fourth secure communication channel is established, between the software client application instance and the third party server entity, especially in view of transmitting - besides the software client application instance - an instance of a further software client application to the client computing device.

According to the present invention and by means of establishing the fifth secure communication channel, it is advantageously possible that - once a component on the client computing device, such as the authentication provider functionality and/or the software client application instance, is sufficiently authenticated, i.e. protected information (or further protected information) transmitted (from the authentication provider server entity and/or the third party server entity) to the component on the client computing device - a direct communication between the third party server entity and the authentication provider functionality is possible using the fifth secure communication channel; this fifth secure communication channel being established prior to the fourth secure communication channel being established. Using the fifth secure communication channel means that the authentication provider server entity is bypassed. Typically, the authentication provider functionality will initiate the fifth secure communication channel to be established (as it is typically unusual to allow an internet-based access to services on client devices, due, typically, to no available public IP addresses on client devices and/or the use of network address and port translation (NAPT) mechanisms).

Altenatively or cumulatively to using the fifth secure communication channel prior to the fourth secure communication channel being established, the fifth secure communication channel might also be used - likewise once a component on the client computing device, such as the authentication provider functionality and/or the software client application instance, is sufficiently authenticated - for other purposes, especially in view of transmitting - besides the software client application instance - an instance of a further software client application to the client computing device. For such a further software client application instance (relating to a (further) software client application being different from the software client application of the software client application instance transmitted in the second step), a further fourth secure communication channel is typically established, between the further software client application instance and the third party server entity, by means of exchanging at least parts of further cryptographic key information and/or further security token information. As for the software client application instance, also for the further software client application instance, the authentication provider functionality (as well as the fifth secure communication channel) acts to provide authentication using an internal secure communication channel. Alternatively to using the fifth secure communication channel and the authentication provider functionality to authenticate the further software client application instance, the further software client application instance can also be authenticated using the software client application instance (acting as authentication provider functionality to the further software client application instance) and the fourth secure communication channel (acting as fifth secure communication channel with regard to the further software client application instance).

According to an embodiment of the present invention, the fourth secure communication channel and/or the fifth secure communication channel is initialized or established using a decentralized authentication protocol and/or an identity provider, especially based on a standard like OpenID, OpenID Connect, SAML, or Shibboleth.

According to such an embodiment of the present invention, the communication between the software client application instance, on the one hand, and the third party server entity, on the other hand, is safeguarded or secured using a decentralized authentication protocol and/or an identity provider, especially based on a standard like OpenID, OpenID Connect, SAML, or Shibboleth. In this case, the software client application instance provides, to the authentication provider functionality, an address information of the third party server entity (such as a link information) as well as the associated certificate of the third party server entity (the third party entity, especially corresponding to the developer of the software client application, typically provides its public certificate as part of the software client application instance; and the software client application instances provides this public certificate to the authentication provider functionality), and the authentication provider functionality requests the provisioning of authentication information from the third party server entity. The third party server entity in turn requests authentication from the authentication provider server entity; this request is authenticated by the authentication provider functionality. The authentication provider server entity transmits the corresponding data (i.e. the authentication information or authentication elements or secure information) to the third party server entity, and the authentication information (or authentication elements or secure information) can be transmitted (using the fifth secure communication channel) to the client computing device. The advantage of using a decentralized authentication protocol and/or an identity provider, especially based on a standard like OpenID, OpenID Connect, SAML, or Shibboleth, is that the authentication provider server entity and the third party server entity do not need to be coupled prior to the authentication provider functionality requesting the provisioning of authentication information from the third party server entity; the third party server entity just needs to support the use of the decentralized authentication protocol and/or an identity provider, especially based on a standard like OpenID, OpenID Connect, SAML, or Shibboleth.

According to an embodiment of the present invention, the authentication provider functionality and the authentication provider server entity are part of a mobile device management system and/or part of the application distribution entity.

According to an embodiment of the present invention, the transmission of
-- the or part of the cryptographic key information and/or
-- the or part of the security token information
is realized by means of secret sharing.

According to such an embodiment of the present invention, it is advantageously possible that from the pieces of authentication information (or the protected information; typically (part of) the cryptographic key information and/or (part of) a security token information), a first partial information and at least a second partial information are derived, wherein both the first and (at least) second partial information are transmitted to the client computing device, but using different secure communication channels, such as the first and the second secure communication channel, or the second and the fifth secure communication channel, wherein at least the first partial information and the second partial information are necessary to obtain the protected information.

According to an embodiment of the present invention, a unique identity information is assigned to the software client application instance, the identity information being specific to the software client application instance or to the combination of the software client application instance and the client computing device, wherein during the second step, the identity information is transmitted to the client computing device, wherein especially the identity information is transmitted by the client computing device to the third party server entity.

By means of using a unique identity information that is assigned to the software client application instance, it is advantageously possible, according to the present invention, to identify each software client application instance distributed by the application distribution entity. Hence, according to an embodiment of the present invention, the identity information is additionally transmitted to the client computing device using the first secure communication channel (i.e. the identity information is transmitted additionally to the software client application instance).

According to a further embodiment of the present invention, the unique identity information is an anonymous information or a pseudonymous information or an information identifying the user of the software client application instance, and wherein - in case of the unique identity information being anonymous information - especially the unique identity information is independent from an identification of either the software client application instance and/or the software client application and/or the client computing device and/or the user of the client computing device (as in this case otherwise that data might be misused to break the intended anonymity).

According to an embodiment of the present invention, the application distribution entity is an application store, wherein especially the authentication provider server entity is identical to the third party server entity.

Furthermore, the present invention relates to a system according to claim 11.

By means of such a system, it is advantageously possible according to the present invention to securely (i.e. in a protected manner) transmit the protected information to the client computing device.

Additionally, a software client application instance or client computing device is disclosed for providing an enhanced level of authentication related to a secure software client application that is provided, by an application distribution entity, in order to be transmitted, using a telecommunications network, to a client computing device in view of software code of the software client application being executed by the client computing device,
wherein a first secure communication channel is established - in view of transmitting an instance of the software client application to the client computing device - between the client computing device and the application distribution entity,
wherein the client computing device comprises an instance of an authentication provider functionality, wherein a second secure communication channel is established between the authentication provider functionality and an authentication provider server entity, and wherein a third secure communication channel is established between the authentication provider server entity and a third party server entity,
the software client application instance being configured such that:
   -- in view of subsequently allowing for an authenticated transmission of data - provided by the software client application instance upon it being executed by the client computing device - to the third party server entity, the authentication provider functionality is initialized or installed within the client computing device and the second secure communication channel as well as the third secure communication channel is initialized or established,
   -- the software client application instance is transmitted, using the first secure communication channel, to the client computing device,
   -- a fourth secure communication channel is established, between the software client application instance and the third party server entity, by means of exchanging at least parts of cryptographic key information and/or security token information using - besides the second secure communication channel and the third secure communication channel
   - an internal secure communication channel, the internal secure communication channel being internal to the client computing device, between the software client application instance and the authentication provider functionality.

By means of such a software client application instance or client computing device, it is advantageously possible to securely (i.e. in a protected manner) transmit the protected information to the client computing device.

Furthermore, a third party server entity is disclosed for providing an enhanced level of authentication related to a secure software client application that is provided, by an application distribution entity, in order to be transmitted, using a telecommunications network, to a client computing device in view of software code of the software client application being executed by the client computing device,
wherein a first secure communication channel is established - in view of transmitting an instance of the software client application to the client computing device - between the client computing device and the application distribution entity,
wherein the client computing device comprises an instance of an authentication provider functionality, wherein a second secure communication channel is established between the authentication provider functionality and an authentication provider server entity, and wherein a third secure communication channel is established between the authentication provider server entity and a third party server entity,
the third party server entity being configured such that:
   -- in view of subsequently allowing for an authenticated transmission of data - provided by the software client application instance upon it being executed by the client computing device - to the third party server entity, the authentication provider functionality is initialized or installed within the client computing device and the second secure communication channel as well as the third secure communication channel is initialized or established,
   -- the software client application instance is transmitted, using the first secure communication channel, to the client computing device,
   -- a fourth secure communication channel is established, between the software client application instance and the third party server entity, by means of exchanging at least parts of cryptographic key information and/or security token information using - besides the second secure communication channel and the third secure communication channel
   - an internal secure communication channel, the internal secure communication channel being internal to the client computing device, between the software client application instance and the authentication provider functionality.

By means of such a third party server entity, it is advantageously possible to securely (i.e. in a protected manner) transmit the protected information to the client computing device.

Furthermore, the present invention relates to a program comprising a computer readable program code which, when executed on a computer or on a client computing device or as part of a software client application instance or on an application distribution entity or on a trusted entity, or in part on a client computing device and/or in part as part of a software client application instance and/or in part on an application distribution entity and/or in part on a trusted entity, causes the computer and/or the client computing device and/or the software client application instance and/or the application distribution entity and/or the trusted entity to perform an inventive method.

Still additionally, the present invention relates to a storage medium storing a computer program for providing an enhanced level of authentication related to a secure software client application provided by an application distribution entity, the computer program comprising program code which, when executed on a computer or on a client computing device or as part of a software client application instance or on an application distribution entity or on a trusted entity, or in part on a client computing device and/or in part as part of a software client application instance and/or in part on an application distribution entity and/or in part on a trusted entity, causes the computer and/or the client computing device and/or the software client application instance and/or the application distribution entity and/or the trusted entity to perform an inventive method.

Additionally, the present invention relates to a computer-readable medium comprising instructions which when executed on a computer or on a client computing device or as part of a software client application instance or on an application distribution entity or on a trusted entity, or in part on a client computing device and/or in part as part of a software client application instance and/or in part on an application distribution entity and/or in part on a trusted entity, causes the computer or the client computing device or the software client application instance or the application distribution entity or the trusted entity to perform an inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

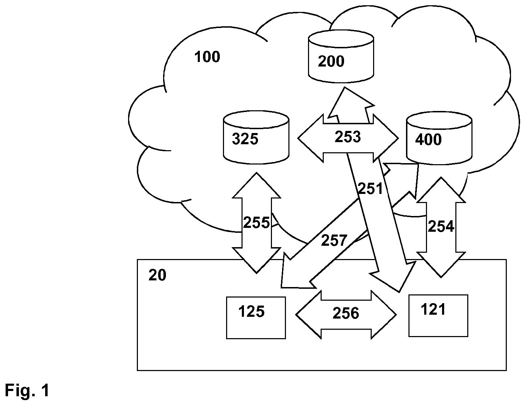

Figure 1 schematically illustrates an exemplary system and situation according to the present invention where a mobile communication network - with a user equipment connected to the mobile communication network as a client computing device - is connected to an application distribution entity, and the client computing device is able to exchange information with a authentication provider server entity and/or with a third party server entity.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a system for realizing the present invention is schematically shown, the system comprising a telecommunications network 100, especially a mobile communication network 100, and especially a public land mobile network 100. The telecommunications network 100 is connected to a user equipment 20 that is also referred to as a client computing device 20. The system furthermore also comprises an application distribution entity 200, and a third party server entity 400. The present invention is based on using an authentication provider functionality 125 as part of the client computing device 20 that communicates with a software client application instance 121 installed on the client computing device 20 using an internal secure communication channel 256.

According to the present invention, the software client application instance 121 is transmitted to the client computing device 20, i.e. after this transmission, the client computing device 20 comprises the software client application instance 121. Furthermore according to the present invention, a protected information needs to be transmitted to the client computing device 20.

According to the present invention, a first secure communication channel 251 is established - in view of transmitting an instance 121 of the software client application to the client computing device 20 - between the client computing device 20 and the application distribution entity 200. The client computing device 20 comprises an instance of an authentication provider functionality 125, wherein a second secure communication channel 255 is established between the authentication provider functionality 125 and an authentication provider server entity 325, and wherein a third secure communication channel 253 is established between the authentication provider server entity 325 and a third party server entity 400.

In a first step, in view of subsequently allowing for an authenticated transmission of data - provided by the software client application instance 121 upon it being executed by the client computing device 20 - to the third party server entity 400, the authentication provider functionality 125 is initialized or installed within the client computing device 20 and the second secure communication channel 255 as well as the third secure communication channel 253 is initialized or established. In a second step, prior to, during or subsequent to the first step, the software client application instance 121 is transmitted, using the first secure communication channel 251, to the client computing device 20, and in a third step, subsequent to the second step, a fourth secure communication channel 254 is established, between the software client application instance 121 and the third party server entity 400, by means of exchanging at least (part of) a cryptographic key information and/or (part of) a security token information using - besides the second secure communication channel 255 and the third secure communication channel 253 - the internal secure communication channel 256, the internal secure communication channel 256 being internal to the client computing device 20, between the software client application instance 121 and the authentication provider functionality 125.

According to one variant of the present invention, the protected information (i.e. the asymmetric pair of cryptographic keys and/or to the security token information) is generated by the third party server entity 400 (and transmitted using the third secure communication channel 253, the second secure communication channel 255, and the internal secure communication channel 256 to the software client application 121). Alternatively, the protected information is generated by the authentication provider server entity 325 (and transmitted using the second secure communication channel 255, and the internal secure communication channel 256 to the software client application 121), based on the authentication provider server entity 325 and the third party server entity 400 having the third secure communication channel 253 established in a protected manner. Furthermore alternatively, the protected information is generated by the authentication provider functionality 125 (and transmitted using the internal secure communication channel 256 to the software client application 121), based on the authentication provider server entity 325 and the third party server entity 400 having the third secure communication channel 253 established in a protected manner, and the authentication provider server entity 325 and the authentication provider functionality having the second secure communication channel 255 established in a protected manner.

The authentication provider functionality 125 typically needs to be individualized once, espeically by means of using mechanisms such as a public app store or a mobile device management or the like. An important conditions that needs to be verified is that the second secure communication channel 255 between the authentication provider functionality 125 and the authentication provider server entity 325 (i.e. the backend component of the authentication provider functionality 125) is a secure communication link. This authentication provider server entity 325 serves to communicate with the third party server entity 400, typically a developer of the software client application instance 125, in order to provision protected information to the software client application instance 125. Regarding the protected information, the authentication provider server entity 325 and the authentication provider functionality 125 are acting as software distribution point or app store.

The authentication provider functionality 125 communicates with the authentication provider server entity 325 using the second secure communication channel 255 as a secure channel; upon installing or initializing the authentication provider functionality 125, corresponding protected information, such as cryptographic keys are transmitted securely, typically using protected communication channels.

The authentication provider server entity 325 communicates with the third party server entity 400 in a protected manner. The basis for such communication might be a contractual relationship between both, leading to securing the third secure communication channel 253. Alternatively, this communication can be protected by means of technologies such as OpenID or OpenID Connect; this is typically based on both the third party server entity 400 as well as the authentication provider server entity 325 having, respectively, a relationship with trusted entity (not depicted in Figure 1). In order to establish the third secure communication channel 253, it is also possible to exchanging encrypted and signed emails (using, e.g., S/MIME or PGP and comparing the fingerprints of the public keys or certificates), or to use a internet application or web application protected via TLS (Top Level Security), e.g. a web application provided by the authentication provider server entity 325; in this case, the third party server entity would register at that web application.

By means of the second secure communication channel 255, the third secure communication channel 253, and the internal secure communication channel 256, it is possible to establish the fourth secure communication channel 254 between the software client application instance 121 and the thrid party server entity 400. It is thereby advantageously possible that the software client application instance 121 authenticates itself with respect to the third party server entity 400.

According to the present invention, it is possible that the authentication provider functionality 125 generates pairs of cryptographic keys (or at least one pair of cryptographic keys) to be used by the software client application instance 121. The thus generated private key (or, more generally, the protected information generated by the client computing device 20 or a (software) component thereof (i.e. the authentication provider functionality 125 and/or the software client application 121)) does not need to leave the client computing device 20. The generated private key or, more generally, the protected information can, e.g., be transferred from the authentication provider functionality 125 to the software client application instance 121, and be stored at a protected location, such as in a keychain.

According to the present invention, it is possible and preferred that a given protected information to be transmitted between different nodes or entities is not transmitted using one and the same transmission channel but using at least two transmission channels. Basically, the protected information is deviced into different parts (the first partial information and at least the second partial information) and transmitted using different transmission channels. Thereby, an enhanced level of authentication is able to be provided related to a secure software client application instance 121 and/or related to the client computing device 20.

The protected information, e.g. comprising or corresponding to the asymmetric pair of cryptographic keys and/or to the security token information, is generated in view of subsequently allowing for an authenticated transmission of data - provided by the software client application instance 121 upon it being executed by the client computing device 20 - to the third party server entity 400. The protected information is either generated by the third party server entity 400 and/or by a trusted entity (not depicted in Figure 1), and the first partial information and at least a second partial information is derived from the protected information. Subsequently, the first partial information is transmitted to the client computing device 20 using different secure communication channels.

According to the present invention, the communication between the client computing device 20 and the third party server entity 400 is to be secured by means of not only relying on the use of a (comparatively high level) server certificate but also using a kind of (comparatively high level) client certificate. According to the present invention, the third party server entity 400 corresponds, e.g., to an application server, i.e. providing the server component of the software client application (instance) on the client computing device 20.

## Claims

1. Method for providing an enhanced level of authentication related to a secure software client application that is provided, by an application distribution entity (200), in order to be transmitted, using a telecommunications network (100), to a client computing device (20) in view of software code of the software client application being executed by the client computing device (20),
wherein a first secure communication channel (251) is established - in view of transmitting an instance (121) of the software client application to the client computing device (20) - between the client computing device (20) and the application distribution entity (200),
wherein the client computing device (20) comprises an instance of an authentication provider functionality (125), wherein a second secure communication channel (255) is established between the authentication provider functionality (125) and an authentication provider server entity (325), and wherein a third secure communication channel (253) is established between the authentication provider server entity (325) and a third party server entity (400),
wherein the method comprises the following steps:
-- in a first step, in view of subsequently allowing for an authenticated transmission of data - provided by the software client application instance (121) upon it being executed by the client computing device (20) - to the third party server entity (400), the authentication provider functionality (125) is initialized or installed within the client computing device (20) and the second secure communication channel (255) as well as the third secure communication channel (253) is initialized or established,
-- in a second step, prior to, during or subsequent to the first step, the software client application instance (121) is transmitted, using the first secure communication channel (251), to the client computing device (20),
-- in a third step, subsequent to the second step, a fourth secure communication channel (254) is established, between the software client application instance (121) and the third party server entity (400), by means of exchanging at least parts of cryptographic key information and/or security token information using - besides the second secure communication channel (255) and the third secure communication channel (253) - an internal secure communication channel (256), the internal secure communication channel (256) being internal to the client computing device (20), between the software client application instance (121) and the authentication provider functionality (125).

2. Method according to claim 1, wherein the internal secure communication channel (256) corresponds to an inter process communication channel within the client computing device (20), especially using a protocol handler, and especially as part of the operating system of the client computing device (20).

3. Method according to one of the preceding claims, wherein the authentication provider functionality (125) is initialized by installing the authentication provider functionality (125) - especially from the application distribution entity (200) - as an application on the client computing device (20) and thereby initializing and/or establishing the second secure communication channel (255) with the authentication provider server entity (325),
the third secure communication channel (253) between the authentication provider server entity (325) and the third party server entity (400) especially being initialized or established prior to, during or subsequent to the installation of the authentication provider functionality (125).

4. Method according to one of the preceding claims, wherein - in order to provide for an authenticated transmission of data between the software client application instance (121) and the third party server entity (400) - an asymmetric pair of cryptographic keys is used, comprising a specific private cryptographic key (222) and a specific public cryptographic key (223),
-- wherein the asymmetric pair of cryptographic keys is generated by the authentication provider functionality (125) or by the software client application instance (121) and at least a further protected information is transmitted using at least the second secure communication channel (255), or
-- wherein the asymmetric pair of cryptographic keys is generated by the authentication provider server entity (325) or by the third party server entity (400) and at least the specific private cryptographic key (222) is transmitted using at least the second secure communication channel (255).

5. Method according to one of the preceding claims, wherein - in order to provide for an authenticated transmission of data between the software client application instance (121) and the third party server entity (400) - security token information is used,
-- wherein the security token information is generated by the authentication provider functionality (125) or by the software client application instance (121) and at least a further protected information is transmitted using at least the second secure communication channel (255), or
-- wherein the security token information is generated by the authentication provider server entity (325) or by the third party server entity (400) and transmitted using at least the second secure communication channel (255).

6. Method according to one of the preceding claims, wherein a fifth secure communication channel (257), directly between the authentication provider functionality (125) and the third party server (400), is established,
wherein the fifth secure communication channel is established prior to the fourth secure communication channel (254) being established, between the software client application instance (121) and the third party server entity (400), or
wherein the fifth secure communication channel (257) is established once the fourth secure communication channel (254) is established, between the software client application instance (121) and the third party server entity (400), especially in view of transmitting - besides the software client application instance (121) - an instance of a further software client application to the client computing device (20).

7. Method according to one of the preceding claims, wherein the fourth secure communication channel (254) and/or the fifth secure communication channel (257) is initialized or established using a decentralized authentication protocol and/or an identity provider, especially based on a standard like OpenID, OpenID Connect, SAML, or Shibboleth.

8. Method according to one of the preceding claims, wherein the authentication provider functionality (125) and the authentication provider server entity (325) are part of a mobile device management system and/or part of the application distribution entity (200).

9. Method according to one of the preceding claims, wherein the transmission of
-- the or part of the cryptographic key information and/or
-- the or part of the security token information
is realized by means of secret sharing.

10. Method according to one of the preceding claims, wherein the application distribution entity (200) is an application store, wherein especially the authentication provider server entity (325) is identical to the third party server entity (400).

11. System for providing an enhanced level of authentication related to a secure software client application that is provided, by an application distribution entity (200), in order to be transmitted, using a telecommunications network (100), to a client computing device (20) in view of software code of the software client application being executed by the client computing device (20), the system comprising the client computing device (20), the application distribution entity (200), and a third party server entity (400),
wherein a first secure communication channel (251) is established - in view of transmitting an instance (121) of the software client application to the client computing device (20) - between the client computing device (20) and the application distribution entity (200),
wherein the client computing device (20) comprises an instance of an authentication provider functionality (125), wherein a second secure communication channel (255) is established between the authentication provider functionality (125) and an authentication provider server entity (325), and wherein a third secure communication channel (253) is established between the authentication provider server entity (325) and a third party server entity (400),
the system being configured such that:
-- in view of subsequently allowing for an authenticated transmission of data - provided by the software client application instance (121) upon it being executed by the client computing device (20) - to the third party server entity (400), the authentication provider functionality (125) is initialized or installed within the client computing device (20) and the second secure communication channel (255) as well as the third secure communication channel (253) is initialized or established,
-- the software client application instance (121) is transmitted, using the first secure communication channel (251), to the client computing device (20), prior to being executed by the client computing device (20);
-- a fourth secure communication channel (254) is established, between the software client application instance (121) and the third party server entity (400), by means of exchanging at least parts of cryptographic key information and/or security token information using - besides the second secure communication channel (255) and the third secure communication channel (253) - an internal secure communication channel (256), the internal secure communication channel (256) being internal to the client computing device (20), between the software client application instance (121) and the authentication provider functionality (125).

12. Computer program product comprising a computer readable program code which, when executed on a client computing device (20), a software client application instance (121), an application distribution entity (200) an authentication provider functionality (125) comprised within the client computing device, an authentication provider server entity (325) and a third party server entity (400), client computing device (20), the software client application instance (121), the application distribution entity (200), the authentication provider functionality (125) comprised within the client computing device, the authentication provider server entity (325) and the third party server entity (400), to perform a method according one of claims 1 to 9.

13. A computer program storage medium having stored therein the computer program product of claim 12.

## Patentansprüche

1. Verfahren zum Bereitstellen einer verbesserten Authentifizierungsqualität in Bezug auf eine sichere Software-Client-Anwendung, die durch eine Anwendungsverteilungsentität (200) bereitgestellt wird, um unter Verwendung eines Telekommunikationsnetzes (100) an eine Client-Computervorrichtung (20) im Hinblick auf Software-Code der Software-Client-Anwendung, die durch die Client-Computervorrichtung (20) ausgeführt wird, gesendet zu werden,
wobei ein erster sicherer Kommunikationskanal (251) - im Hinblick auf das Senden einer Instanz (121) der Software-Client-Anwendung an die Client-Computervorrichtung (20) - zwischen der Client-Computervorrichtung und der Anwendungsverteilungsentität (200) hergestellt wird, wobei die Client-Computervorrichtung (20) eine Instanz einer Authentifizierungsanbieterfunktionalität (125) umfasst, wobei ein zweiter sicherer Kommunikationskanal (255) zwischen der Authentifizierungsanbieterfunktionalität (125) und einer Authentifizierungsanbieter-Serverentität (325) hergestellt wird und wobei ein dritter sicherer Kommunikationskanal (253) zwischen der Authentifizierungsanbieter-Serverentität (325) und einer Dritt-Serverentität (400) hergestellt wird,
wobei das Verfahren die folgenden Schritte umfasst:
- in einem ersten Schritt, im Hinblick auf ein späteres Gestatten einer authentifizierten Übertragung von Daten - die durch die Software-Client-Anwendungsinstanz (121) im Moment ihrer Ausführung durch die Client-Computervorrichtung (20) bereitgestellt werden - an die Dritt-Serverentität (400), wird die Authentifizierungsanbieterfunktionalität (125) innerhalb der Client-Computervorrichtung (20) initialisiert oder installiert und der zweite sichere Kommunikationskanal (255) sowie der dritte sichere Kommunikationskanal (253) werden initialisiert oder hergestellt,
- in einem zweiten Schritt, vor, während oder nach dem ersten Schritt, wird die Software-Client-Anwendungsinstanz (121) unter Verwendung des ersten sicheren Kommunikationskanals (251) an die Client-Computervorrichtung (20) übertragen,
- in einem dritten Schritt, im Anschluss an den zweiten Schritt, wird ein vierter sicherer Kommunikationskanal (254) zwischen der Software-Client-Anwendungsinstanz (121) und der Dritt-Serverentität (400) durch Austauschen mindestens von Teilen kryptographischer Schlüsselinformationen und/oder Sicherheitstoken-Informationen unter Verwendung eines - neben dem zweiten sicheren Kommunikationskanal (255) und dem dritten sicheren Kommunikationskanal (253) - internen sicheren Kommunikationskanals (256) hergestellt, wobei sich der interne sichere Kommunikationskanal (256) innerhalb der Client-Computervorrichtung (20) zwischen der Software-Client-Anwendungsinstanz (121) und der Authentifizierungsanbieterfunktionalität (125) befindet.

2. Verfahren nach Anspruch 1, wobei der interne sichere Kommunikationskanal (256) einem Interprozesskommunikationskanal innerhalb der Client-Computervorrichtung (20) entspricht, insbesondere unter Verwendung eines Protokoll-Handlers und insbesondere als Teil des Betriebssystems der Client-Computervorrichtung (20) .

3. Verfahren nach einem der vorangehenden Ansprüche, wobei die Authentifizierungsanbieterfunktionalität (125) initialisiert wird, indem die Authentifizierungsanbieterfunktionalität (125) - insbesondere von der Anwendungsverteilungsentität (200) aus - als eine Anwendung auf der Client-Computervorrichtung (20) installiert wird und dadurch der zweite sichere Kommunikationskanal (255) mit der Authentifizierungsanbieter-Serverentität (325) initialisiert und/oder hergestellt wird,
wobei der dritte sichere Kommunikationskanal (253) zwischen der Authentifizierungsanbieter-Serverentität (325) und der Dritt-Serverentität (400) insbesondere vor, während oder nach der Installation der Authentifizierungsanbieterfunktionalität (125) initialisiert oder hergestellt wird.

4. Verfahren nach einem der vorangehenden Ansprüche, wobei - um eine authentifizierte Übertragung von Daten zwischen der Software-Client-Anwendungsinstanz (121) und der Dritt-Serverentität (400) bereitzustellen - ein asymmetrisches Paar kryptographischer Schlüssel verwendet wird, das einen spezifischen privaten kryptographischen Schlüssel (222) und einen spezifischen öffentlichen kryptographischen Schlüssel (223) umfasst,
- wobei das asymmetrische Paar kryptografischer Schlüssel durch die Authentifizierungsanbieterfunktionalität (125) oder durch die Software-Client-Anwendungsinstanz (121) generiert wird und mindestens eine weitere geschützte Information unter Verwendung mindestens des zweiten sicheren Kommunikationskanals (255) übertragen wird, oder
- wobei das asymmetrische Paar kryptographischer Schlüssel durch die Authentifizierungsanbieter-Serverentität (325) oder durch die Dritt-Serverentität (400) generiert wird und mindestens der spezifische private kryptographische Schlüssel (222) unter Verwendung mindestens des zweiten sicheren Kommunikationskanals (255) übertragen wird.

5. Verfahren nach einem der vorangehenden Ansprüche, wobei - um eine authentifizierte Übertragung von Daten zwischen der Software-Client-Anwendungsinstanz (121) und der Dritt-Serverentität (400) bereitzustellen - Sicherheitstoken-Informationen verwendet werden,
- wobei die Sicherheitstoken-Informationen durch die Authentifizierungsanbieterfunktionalität (125) oder durch die Software-Client-Anwendungsinstanz (121) generiert werden und mindestens eine weitere geschützte Information unter Verwendung mindestens des zweiten sicheren Kommunikationskanals (255) übertragen wird oder
- wobei die Sicherheitstoken-Informationen durch die Authentifizierungsanbieter-Server-Einheit (325) oder durch die Dritt-Server-Einheit (400) generiert und unter Verwendung mindestens des zweiten sicheren Kommunikationskanals (255) übertragen werden.

6. Verfahren nach einem der vorangehenden Ansprüche, wobei ein fünfter sicherer Kommunikationskanal (257) direkt zwischen der Authentifizierungsanbieterfunktionalität (125) und dem Drittserver (400) hergestellt wird,
wobei der fünfte sichere Kommunikationskanal vor der Herstellung des vierten sicheren Kommunikationskanals (254) zwischen der Software-Client-Anwendungsinstanz (121) und der Dritt-Serverentität (400) hergestellt wird oder wobei - sobald der vierte sichere Kommunikationskanal (254) hergestellt ist - der fünfte sichere Kommunikationskanal (257) zwischen der Software-Client-Anwendungsinstanz (121) und der Dritt-Serverentität (400) hergestellt wird, insbesondere im Hinblick auf die Übertragung - neben der Software-Client-Anwendungsinstanz (121) - einer Instanz einer weiteren Software-Client-Anwendung an die Client-Computervorrichtung (20).

7. Verfahren nach einem der vorangehenden Ansprüche, wobei der vierte sichere Kommunikationskanal (254) und/oder der fünfte sichere Kommunikationskanal (257) unter Verwendung eines dezentralisierten Authentifizierungsprotokolls und/oder eines Identitätsanbieters, insbesondere auf der Grundlage eines Standards wie OpenID, OpenID Connect, SAML oder Shibboleth, initialisiert oder hergestellt werden.

8. Verfahren nach einem der vorangehenden Ansprüche, wobei die Authentifizierungsanbieterfunktionalität (125) und die Authentifizierungsanbieter-Serverentität (325) Teil eines Mobilvorrichtungsmanagementsystems und/oder Teil der Anwendungsverteilungsentität (200) sind.

9. Verfahren nach einem der vorangehenden Ansprüche, wobei die Übertragung
- der - oder eines Teils der - kryptographischen Schlüsselinformationen und/oder
- der - oder eines Teils der - Sicherheitstoken-Informationen
mittels einer gemeinsamen Nutzung von Geheimnissen realisiert wird.

10. Verfahren nach einem der vorangehenden Ansprüche, wobei die Anwendungsverteilungsentität (200) ein Anwendungsspeicher ist, wobei insbesondere die Authentifizierungsanbieter-Serverentität (325) mit der Dritt-Serverentität (400) identisch ist.

11. System zum Bereitstellen einer verbesserten Authentifizierungsqualität in Bezug auf eine sichere Software-Client-Anwendung, die durch eine Anwendungsverteilungsentität (200) bereitgestellt wird, um unter Verwendung eines Telekommunikationsnetzes (100) an eine Client-Computervorrichtung (20) im Hinblick auf Software-Code der Software-Client-Anwendung, die durch die Client-Computervorrichtung (20) ausgeführt wird, gesendet zu werden, wobei das System die Client-Computervorrichtung (20), die Anwendungsverteilungsentität (200) und eine Dritt-Serverentität (400) umfasst,
wobei ein erster sicherer Kommunikationskanal (251) - im Hinblick auf das Senden einer Instanz (121) der Software-Client-Anwendung an die Client-Computervorrichtung (20) - zwischen der Client-Computervorrichtung und der Anwendungsverteilungsentität (200) hergestellt wird, wobei die Client-Computervorrichtung (20) eine Instanz einer Authentifizierungsanbieterfunktionalität (125) umfasst, wobei ein zweiter sicherer Kommunikationskanal (255) zwischen der Authentifizierungsanbieterfunktionalität (125) und einer Authentifizierungsanbieter-Serverentität (325) hergestellt wird, und wobei ein dritter sicherer Kommunikationskanal (253) zwischen der Authentifizierungsanbieter-Serverentität (325) und einer Dritt-Serverentität (400) hergestellt wird,
wobei das System so eingerichtet ist, dass:
- im Hinblick auf ein späteres Gestatten einer authentifizierten Übertragung von Daten - die durch die Software-Client-Anwendungsinstanz (121) im Moment ihrer Ausführung durch die Client-Computervorrichtung (20) bereitgestellt werden - an die Dritt-Serverentität (400) die Authentifizierungsanbieterfunktionalität (125) innerhalb der Client-Computervorrichtung (20) initialisiert oder installiert wird, und der zweite sichere Kommunikationskanal (255) sowie der dritte sichere Kommunikationskanal (253) initialisiert oder hergestellt werden,
- die Software-Client-Anwendungsinstanz (121) unter Verwendung des ersten sicheren Kommunikationskanals (251) an die Client-Computervorrichtung (20) übertragen wird, bevor sie durch die Client-Computervorrichtung (20) ausgeführt wird;
- ein vierter sicherer Kommunikationskanal (254) zwischen der Software-Client-Anwendungsinstanz (121) und der Dritt-Server-Entität (400) durch Austauschen mindestens von Teilen kryptographischer Schlüsselinformationen und/oder Sicherheitstoken-Informationen unter Verwendung eines - neben dem zweiten sicheren Kommunikationskanal (255) und dem dritten sicheren Kommunikationskanal (253) - internen sicheren Kommunikationskanals (256) hergestellt wird, wobei sich der interne sichere Kommunikationskanal (256) innerhalb der Client-Computervorrichtung (20) zwischen der Software-Client-Anwendungsinstanz (121) und der Authentifizierungsanbieterfunktionalität (125) befindet.

12. Computerprogrammprodukt, umfassend einen computerlesbaren Programmcode, der, wenn er auf einer Client-Computervorrichtung (20), einer Software-Client-Anwendungsinstanz (121), einer Anwendungsverteilungsentität (200), einer Authentifizierungsanbieterfunktionalität (125), die in der Client-Computervorrichtung enthalten ist, einer Authentifizierungsanbieter-Serverentität (325) und einer Dritt-Serverentität (400) ausgeführt wird, die Client-Computervorrichtung (20), die Software-Client-Anwendungsinstanz (121), die Anwendungsverteilungsentität (200), die Authentifizierungsanbieterfunktionalität (125), die in der Client-Computervorrichtung enthalten ist, die Authentifizierungsanbieter-Serverentität (325) und die Dritt-Serverentität (400) veranlasst, ein Verfahren nach einem der Ansprüche 1 bis 9 durchzuführen.

13. Computerprogramm-Speichermedium, auf dem das Computerprogrammprodukt nach Anspruch 12 gespeichert ist.

## Revendications

1. Procédé permettant de procurer un niveau accru d'authentification associé à une application logicielle client sécurisée qui est fournie, par une entité de distribution d'applications (200), afin d'être transmise, à l'aide d'un réseau de télécommunications (100), à un dispositif informatique client (20), en vue de l'exécution d'un code logiciel de l'application logicielle client par le dispositif informatique client (20),
dans lequel un premier canal de communication sécurisé (251) est établi - en vue de transmettre une instance (121) de l'application logicielle client au dispositif informatique client (20) - entre le dispositif informatique client (20) et l'entité de distribution d'applications (200),
dans lequel le dispositif informatique client (20) comprend une instance de fonctionnalité de fournisseur d'authentification (125), dans lequel un deuxième canal de communication sécurisé (255) est établi entre la fonctionnalité de fournisseur d'authentification (125) et une entité serveur de fournisseur d'authentification (325), et dans lequel un troisième canal de communication sécurisé (253) est établi entre l'entité serveur de fournisseur d'authentification (325) et une entité serveur tiers (400), dans lequel le procédé comprend les étapes suivantes :
- dans une première étape, en vue de permettre par la suite une transmission authentifiée de données - fournies par l'instance d'application logicielle client (121) lors de son exécution par le dispositif informatique client (20) - à l'entité serveur tiers (400), la fonctionnalité de fournisseur d'authentification (125) est initialisée ou installée dans le dispositif informatique client (20) et le deuxième canal de communication sécurisé (255) ainsi que le troisième canal de communication sécurisé (253) sont initialisés ou établis,
- dans une deuxième étape, avant, pendant ou après la première étape, l'instance d'application logicielle client (121) est transmise, à l'aide du premier canal de communication sécurisé (251), au dispositif informatique client (20),
- dans une troisième étape postérieure à la deuxième étape, un quatrième canal de communication sécurisé (254) est établi entre l'instance d'application logicielle client (121) et l'entité serveur tiers (400), moyennant l'échange au moins de parties d'informations de clés cryptographiques et/ou d'informations de jeton de sécurité à l'aide - outre le deuxième canal de communication sécurisé (255) et le troisième canal de communication sécurisé (253) - d'un canal de communication sécurisé interne (256), le canal de communication sécurisé interne (256) étant interne au dispositif informatique client (20), entre l'instance d'application logicielle client (121) et la fonctionnalité de fournisseur d'authentification (125).

2. Procédé selon la revendication 1, dans lequel le canal de communication sécurisé interne (256) correspond à un canal de communication interprocessus au sein du dispositif informatique client (20), en particulier utilisant un gestionnaire de protocoles, et notamment en tant que partie du système d'exploitation du dispositif informatique client (20).

3. Procédé selon l'une des revendications précédentes, dans lequel la fonctionnalité de fournisseur d'authentification (125) est initialisée par installation de la fonctionnalité de fournisseur d'authentification (125) - en particulier à partir de l'entité de distribution d'applications (200) - en tant qu'application sur le dispositif informatique client (20), ce qui permet d'initialiser et/ou d'établir le deuxième canal de communication sécurisé (255) avec l'entité serveur de fournisseur d'authentification (325),
le troisième canal de communication sécurisé (253) entre l'entité serveur de fournisseur d'authentification (325) et l'entité serveur tiers (400) étant en particulier initialisé ou établi avant, pendant ou après l'installation de la fonctionnalité de fournisseur d'authentification (125).

4. Procédé selon l'une des revendications précédentes, dans lequel - afin de permettre une transmission authentifiée de données entre l'instance d'application logicielle client (121) et l'entité serveur tiers (400) - il est fait appel à une paire asymétrique de clés cryptographiques comprenant une clé cryptographique privée spécifique (222) et une clé cryptographique publique spécifique (223),
- dans lequel la paire asymétrique de clés cryptographiques est générée par la fonctionnalité de fournisseur d'authentification (125) ou par l'instance d'application logicielle client (121) et au moins d'autres informations protégées sont transmises à l'aide au moins du deuxième canal de communication sécurisé (255), ou
- dans lequel la paire asymétrique de clés cryptographiques est générée par l'entité serveur de fournisseur d'authentification (325) ou par l'entité serveur tiers (400) et au moins la clé cryptographique privée spécifique (222) est transmise à l'aide au moins du deuxième canal de communication sécurisé (255).

5. Procédé selon l'une des revendications précédentes, dans lequel - afin de permettre une transmission authentifiée de données entre l'instance d'application logicielle client (121) et l'entité serveur tiers (400) - il est fait appel à des informations de jeton de sécurité,
- dans lequel les informations de jeton de sécurité sont générées par la fonctionnalité de fournisseur d'authentification (125) ou par l'instance d'application logicielle client (121) et au moins d'autres informations protégées sont transmises à l'aide au moins du deuxième canal de communication sécurisé (255), ou
- dans lequel les informations de jeton de sécurité sont générées par l'entité serveur de fournisseur d'authentification (325) ou par l'entité serveur tiers (400) et transmises à l'aide au moins du deuxième canal de communication sécurisé (255).

6. Procédé selon l'une des revendications précédentes, dans lequel est établi un cinquième canal de communication sécurisé (257), directement entre la fonctionnalité de fournisseur d'authentification (125) et le serveur tiers (400),
dans lequel, le cinquième canal de communication sécurisé est établi avant que le quatrième canal de communication sécurisé (254) ne soit établi, entre l'instance d'application logicielle client (121) et l'entité serveur tiers (400), ou
dans lequel, le cinquième canal de communication sécurisé (257) est établi une fois que le quatrième canal de communication sécurisé (254) a été établi, entre l'instance d'application logicielle client (121) et l'entité serveur tiers (400), en particulier, en vue de transmettre - outre l'instance d'application logicielle client (121) - une instance d'une autre application logicielle client au dispositif informatique client (20).

7. Procédé selon l'une des revendications précédentes, dans lequel le quatrième canal de communication sécurisé (254) et/ou le cinquième canal de communication sécurisé (257) est ou sont initialisé(s) ou établi(s) à l'aide d'un protocole d'authentification et/ou d'un fournisseur d'identité décentralisé(s), en particulier sur la base d'une norme telle que OpenID, OpenID Connect, SAML ou Shibboleth.

8. Procédé selon l'une des revendications précédentes, dans lequel la fonctionnalité de fournisseur d'authentification (125) et l'entité serveur de fournisseur d'authentification (325) font partie d'un système de gestion de dispositifs mobiles et/ou font partie de l'entité de distribution d'applications (200).

9. Procédé selon l'une des revendications précédentes, dans lequel la transmission de :
- tout ou partie des informations de clés cryptographiques et/ou
- tout ou partie des informations de jeton de sécurité est réalisée par partage de secret.

10. Procédé selon l'une des revendications précédentes, dans lequel l'entité de distribution d'applications (200) est un magasin d'applications, dans lequel, en particulier, l'entité serveur de fournisseur d'authentification (325) est identique à l'entité serveur tiers (400).

11. Système permettant de procurer un niveau accru d'authentification associé à une application logicielle client sécurisée qui est fournie, par une entité de distribution d'applications (200), afin d'être transmise, à l'aide d'un réseau de télécommunications (100), à un dispositif informatique client (20), en vue de l'exécution d'un code logiciel de l'application logicielle client par le dispositif informatique client (20), le système comprenant le dispositif informatique client (20), l'entité de distribution d'applications (200) et une entité serveur tiers (400),
dans lequel un premier canal de communication sécurisé (251) est établi - en vue de transmettre une instance (121) de l'application logicielle client au dispositif informatique client (20) - entre le dispositif informatique client (20) et l'entité de distribution d'applications (200),
dans lequel le dispositif informatique client (20) comprend une instance de fonctionnalité de fournisseur d'authentification (125), dans lequel un deuxième canal de communication sécurisé (255) est établi entre la fonctionnalité de fournisseur d'authentification (125) et une entité serveur de fournisseur d'authentification (325), et dans lequel un troisième canal de communication sécurisé (253) est établi entre l'entité serveur de fournisseur d'authentification (325) et une entité serveur tiers (400),
le système étant configuré de telle sorte que :
- en vue de permettre par la suite une transmission authentifiée de données - fournies par l'instance d'application logicielle client (121) lors de son exécution par le dispositif informatique client (20)
- à l'entité serveur tiers (400), la fonctionnalité de fournisseur d'authentification (125) soit initialisée ou installée dans le dispositif informatique client (20) et le deuxième canal de communication sécurisé (255) ainsi que le troisième canal de communication sécurisé (253) soient initialisés ou établis,
- l'instance d'application logicielle client (121) soit transmise, à l'aide du premier canal de communication sécurisé (251), au dispositif informatique client (20), avant d'être exécutée par le dispositif informatique client (20) ;
- un quatrième canal de communication sécurisé (254) soit établi entre l'instance d'application logicielle client (121) et l'entité serveur tiers (400), moyennant l'échange au moins de parties d'informations de clés cryptographiques et/ou d'informations de jeton de sécurité à l'aide - outre le deuxième canal de communication sécurisé (255) et le troisième canal de communication sécurisé (253) - d'un canal de communication sécurisé interne (256), le canal de communication sécurisé interne (256) étant interne au dispositif informatique client (20), entre l'instance d'application logicielle client (121) et la fonctionnalité de fournisseur d'authentification (125).

12. Produit-programme informatique comprenant un code de programme lisible par ordinateur, qui, lorsqu'il est exécuté sur un dispositif informatique client (20), une instance d'application logicielle client (121), une entité de distribution d'applications (200), une fonctionnalité de fournisseur d'authentification (125) comprise dans le dispositif informatique client, une entité serveur de fournisseur d'authentification (325) et une entité serveur tiers (400), fait mettre en œuvre au dispositif informatique client (20), à l'instance d'application logicielle client (121), à l'entité de distribution d'applications (200), à la fonctionnalité de fournisseur d'authentification (125) comprise dans le dispositif informatique client, à l'entité serveur de fournisseur d'authentification (325) et à l'entité serveur tiers (400) un procédé selon l'une des revendications 1 à 9.

13. Support de stockage de programme informatique, sur lequel est stocké le produit-programme informatique selon la revendication 12.
